# EUROPÄISCHE PATENTANMELDUNG

(11) **EP 2 319 876 A1**
(43) Veröffentlichungstag der Anmeldung: **11.05.2011**
(21) Anmeldenummer: 09013072.5
(22) Anmeldetag: 16.10.2009
(51) Int. Cl.: C08G 18/08, C08G 18/12, C08G 18/28, C08G 18/66, C08G 18/76, C09D 175/04

(54) **Aromatsiche Polyurethanharnstoffdispersionen**

(71) Anmelder: Bayer MaterialScience AG, 51368 Leverkusen (DE)
(72) Erfinder: Grablowitz, Hans Georg, Dr., 41462 Neuss (DE); Feller, Thomas, 42659 Solingen (DE); Klee, Hans-Peter, 51399 Burscheid (DE)

(57) **Zusammenfassung**

Die Erfindung betrifft die Herstellung von 4,4'- Diphenylmethandiisocyanat-haltigen (4,4'-MDI) Polyurethanharnstoffdispersionen und deren Verwendung in Beschichtungen.

## Beschreibung

Die Erfindung betrifft die Herstellung von 4,4'- Diphenylmethandiisocyanat-haltigen (4,4'-MDI) Polyurethanharnstoffdispersionen und deren Verwendung in Beschichtungen.

Polyurethanharnstoffdispersionen werden aufgrund steigender ökologischer und damit verbundener gesetzlicher Anforderungen heutzutage in zunehmendem Maße als Beschichtungsmittel eingesetzt, um Lösungsmittel-Emissionen zu reduzieren. Ein Überblick der verschiedenen Typen und Herstellprozesse ist z.B. in Houben-Weyl: "Methoden der Organischen Chemie, Vol. E20, S. 1659-1692" oder in "Ullmann's Encyclopaedia of Industrial Chemistry" (1992), Vol. A21, S. 667-682 zu finden. Im Folgenden werden als Polyurethan-Dispersionen (PUD) auch solche Dispersionen bezeichnet, die neben den Urethan-Gruppen auch Harnstoffgruppen aufweisen.

Aufgrund der höheren Stabilität gegenüber Umwelteinflüssen werden größtenteils solche Polyurethanharnstoffdispersionen verwendet, die auf aliphatischen Polyisocyanaten basieren. Daneben gibt es aber auch Anwendungen, bei denen Bindemittel, die maßgeblich auf aromatischen Polyisocyanaten basieren, eine wichtige Rolle spielen, wie z.B. Klebstoffanwendungen, Textilbeschichtungen etc. Dabei werden vor allem die großtechnisch verfügbaren Diisocyanate Toluylendiisocyanat (TDI) und Diphenylmethandiisocynat (MDI) und die korrespondierenden polymeren Homologen verwendet.

Die Herstellung der Diisocyanate verläuft aber je nach Verfahren so unspezifisch, dass immer ein Gemisch von mehrerer Isomeren entsteht, die gegebenenfalls destillativ aufgereinigt werden oder direkt als Isomerenmischung Einsatz finden. So entsteht bei der TDI-Herstellung das Monomer beispielsweise als Isomerenmischung des entsprechenden 2,4-und 2,6-Diisocyanats. Beim MDI gibt es die 4,4'- 2,2'- und 2,4'-Isomeren, die entweder in Form der Isomerenmischung oder als reine Komponenten Verwendung finden. Aus ökonomischen und ökologischen Gesichtspunkten ist dabei zu berücksichtigen, dass wenn bestimmte Isomeren vorzugsweise verwendet werden, die Verarbeitbarkeit der anderen Isomeren gewährleistet sein sollte. Aufgrund des höheren Dampfdrucks und höherer Toxizität des TDIs ist dem MDI unter diesen Gesichtspunkten der Vorzug zu geben. Aufgrund der symmetrischen Struktur des 4,4'-MDIs und den damit verbundenen günstigeren Kristallisationseigenschaften der korrespondierenden Urethan und Harnstoffgruppe, wäre die ausschließliche Verwendung dieses Polyisocyanats bei der Herstellung von wässrigen Polyurethanbindemitteln wünschenswert.

Die EP 0 581 159 von Münzmay et al. beschreibt Polyurethanharnstoffdispersionen basierend auf aromatischen Diisocyanaten und einem Polyether einer mittleren Molmasse größer 1500 g·mol⁻¹, wobei die Konzentration von Harnstoff- und Urethangruppen in einem bestimmten Wertebereich liegt. Diese Beschichtungsmittel können als Haftstrich zur Beschichtung von Leder und auch Textilien verwendet werden basieren aber auf TDI.

In der US 6,524,978 werden aromatische Polyurethanharnstoffdispersionen zur Teppichrückenkaschierung beschrieben, die mittels externer Emulgatoren dispergiert werden und ein als Polyol mindestens ein Glycerinmonoester enthalten. Nachteilig ist die Verwendung eines migrationsfähigen externen Emulgators und des Glycerinmonoesters, was eine Feuchtigkeitsbarriere zur Folge hat. Dies ist in textilen Anwendungen nicht erwünscht, da beschichtete Textilien aus Gründen des Tragekomforts wasserdampfdurchlässig sein sollten.

Die US 7,240,371 beschreibt ein beschichtetes elastisches Textil, wobei zur Beschichtung eine Polyurethanharnstoffdispersion verwendet wird, die im Wesentlichen auf einer Mischung von 4,4'-MDI und 2,4'-MDI aufgebaut ist und ein Dialkylamin als Blockierungsmittel enthält. Nachteilig ist die Verwendung des Blockierungsmittels, was erst bei erhöhter Temperatur abgespalten wird und damit zu erhöhten Emissionen führt.

Die EP 220 000 beschreibt wässrige Polyurethandispersionen, die dadurch gekennzeichnet sind, dass sie das 2,4'-MDI zu mindestens 5% enthalten. Nachteilig bei den erfmdungsgemäßen Dispersionen ist die Verwendung von NMP als Lösemittel, welches nicht mehr destillativ entfernt werden kann. Ausführungsbeispiel 3D mit reinem 4,4'-MDI führt zu keiner stabilen Dispersion sondern zur Vergelung des Reaktionsansatzes.

In der US 6,3161,08 und US 20070208133 werden hydrophile Polyurethandispersionen offenbart, die dadurch gekennzeichnet sind, dass sie mittels externer Emulgatoren hergestellt werden und frei sind von ionischen Gruppen. In dieser Veröffentlichungen werden zwar Ausführungsbeispiele offenbart, die auf reinem 4,4'-MDI basieren, nachteilig ist die Verwendung externer Emulgatoren, die zu Haftungsbeeinträchtigung führen können und die ausschließlich nicht-ionische interne Hydrophlierung, die dazu führt, dass die resultierenden Dispersionen weniger Temperaturstabil sind.

Die US 2008/0004395 beschreibt Polyurethandispersionen die intern ionisch hydrophiliert sind und die neben einem externen Emulgatoren auch ein Isocyanat-reaktives Blockierungsmittel enthalten, was erst bei höherer Temperatur zur nachträglichen Vernetzung wieder abgespalten werden muss.

Die US 2009/0215954 offenbart wässrige Dispersionen, die auf einer Mischung von mindestens zwei Polyisocyanaten basieren, wobei ein Polyisocyanat das 2,2'-MDI ist.

Die WO 1981/02894 beansprucht Carboxylgruppenhaltige, wässrige Polyurethansysteme, die unter anderem aufgebaut sind aus aromatischen Polyisocyanaten, einem Polyamin und einem Blockierungsmittel. Die Verwendung eines Blockierungsmittel ist nachteilig, da das Blockierungsmittel wieder abgespalten werden muss, was zu zusätzlichen Emissionen führt.

Aufgabe der vorliegenden Erfmdung ist die Herstellung von lagerstabilen 4,4'-MDI-haltigen Polyurethanharnstoff-Dispersionen (PUD), die dadurch gekennzeichnet, sind, dass sie frei sind von Lösemitteln, Blockierungsmitteln und externen Emulgatoren, und bei Ihrer Verwendung als Beschichtung auf textilen Substraten hervorragende Haftungswerte erzielen.

Überraschenderweise wurde nun gefunden, dass lagerstabile, Emulgator-freie 4,4'-MDIhaltige PUDs erhältlich sind, **dadurch gekennzeichnet, dass** sie gleichzeitig intern anionisch und nichtionisch hydrophiliert sind.

Die erfmdungsgemäßen wässrigen Polyurethan-Dispersionen enthalten ein Polyurethanpolymer bestehend aus
a) 5 - 55 Gew.-% 4,4'-Diphenylmethandiisocyanat,
b) 43,4 - 75 Gew.-% ein oder mehrere Polyhydroxyverbindungen einer Molmasse Mₙ von 400 g/mol bis 8000 g/mol einer Funktionalität von 1,5 bis 6,
c) 1 - 10 Gew.-% ein oder mehrere isocyanatreaktive nichtionische Hydrophilierungsmittel,
d) 0,5 - 7 Gew.-% ein oder mehrere ionisch oder potentiell ionische Hydrophilierungsmittel,
e) 0,1 - 3,0 Gew.-% ein oder mehrere Polyaminverbindungen mit einer Molmasse von 32 - 400 g/mol,
f) gegebenenfalls ein Neutralisationsamin
g) gegebenenfalls Polyhydroxyverbindungen einer Funktionalität von 2-3 und einer mittleren Molmasse Mₙ von 62 - 200 g/mol,
wobei sich die Mengenangaben auf alle Aufbaukomponenten des Polyurethanpolymers beziehen.

Komponente a) ist das 4,4'-Diphenylmethandiisocyanat.

Vorzugsweise weist die wässrige Polyurethan-Dispersion einen Festkörpergehalt, d.h. einen Gehalt an Polyurethanpolymer, im Bereich von 20 - 60 Gew.-%, besonders bevorzugt im Bereich von 25 - 55 Gew.-%, ganz besonders bevorzugt im Bereich von 30 - 50. Gew.-% auf.

Vorzugsweise weist die Polyurethandispersion eine Viskosität im Bereich von 10 bis 1000 mPa.s, besonders bevorzugt im Bereich von 20 bis 700 mPa.s, ganz besonders bevorzugt im Bereich von 50 bis 500 mPa.s gemessen nach DIN EN ISO 3219/A.3.

Vorzugsweise weist das Polyurethanpolymer eine Säurezahl im Bereich von 1 bis 25 besonders bevorzugt im Bereich von 4 bis 20, ganz besonders bevorzugt im Bereich von 6 bis 15 gemessen nach DIN EN ISO 2114 auf

Vorzugsweise liegt Komponente a) in Mengen von 13,5 - 48 Gew.-%, besonders bevorzugt 21- 43 Gew.-%, bezogen auf alle Aufbaukomponenten des Polyurethanpolymers vor.

Vorzugsweise besteht das Polyurethanpolymer nicht aus 2,2'-Diphenylmethandiisocyanat, 2,4'-Diphenylmethandiisocyanat bzw. deren Mischungen.

Als Verbindungen b) einsetzbare polymere Polyole weisen ein Molekulargewicht Mₙ von 400 bis 8000 g/mol, bevorzugt von 400 bis 6000 g/mol und besonders bevorzugt von 400 bis 3000 g/mol auf. Ihre Hydroxylzahl beträgt 22 bis 400 mg KOH/g, bevorzugt 30 bis 300 mg KOH/g und besonders bevorzugt 40 bis 250 mg KOH/g und weisen eine OH-Funktionalität von 1,5 bis 6, bevorzugt von 1,8 bis 3 und besonders bevorzugt von 1,9 bis 2,1 auf.

Vorzugsweise liegt die Komponente b) in Mengen von 48,8 - 70 Gew.-%, besonders bevorzugt 52,2 - 65 Gew.-%, bezogen auf alle Aufbaukomponenten des Polyurethanpolymers vor.

Polyole b) im Sinne der vorliegenden Erfindung sind die in der Polyurethanlacktechnologie bekannten organischen Polyhydroxylverbindungen, wie beispielsweise die üblichen Polyesterpolyole, Polyacrylatpolyole, Polyurethanpolyole, Polycarbonatpolyole, Polyetherpolyole, Polyesterpolyacrylatpolyole sowie Polyurethanpolyacrylatpolyole, Polyurethanpolyesterpolyole, Polyurethanpolyetherpolyole, Polyurethanpolycarbonatpolyole, Polyesterpolycarbonatpolyole, Phenol/Formaldehydharze, allein oder in Mischungen. Bevorzugt sind Polyesterpolyole, Polyetherpolyole oder Polycarbonatpolyole, besonders bevorzugt sind Polyetherpolyole.

Als Polyetherpolyole seien z.B. die Polyadditionsprodukte der Styroloxide, des Ethylenoxid, Propylenoxid, Tetrahydrofuran, Butylenoxid, Epichlorhydrins, sowie ihre Mischadditions-und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole genannt.

Geeignete hydroxyfunktionelle Polyether weisen OH-Funktionalitäten von 1,5 bis 6,0, bevorzugt 1,8 bis 3,0, OH-Zahlen von 50 bis 700, bevorzugt von 100 bis 600 mg KOH/g Feststoff und Molekulargewichte Mₙ von 106 bis 4000 g/mol, bevorzugt von 200 bis 3500 auf, wie z.B. Alkoxylierungsprodukte hydroxyfunktioneller Startermoleküle wie Ethylenglykol, Propylenglykol, Butandiol, Hexandiol, Trimethylolpropan, Glycerin, Pentaerythrit, Sorbit oder Gemische dieser und auch anderer hydroxyfunktioneller Verbindungen mit Propylenoxid oder Butylenoxid. Bevorzugt als Polyetherkomponente b) sind Polypropylenoxidpolyole und Polytetramethylenoxidpolyole mit einem Molekulargewicht von 300 bis 4000 g/mol. Hierbei können die besonders niedermolekularen Polyetherpolyole bei entsprechend hohen OH-Gehalten wasserlöslich sein. Besonders bevorzugt sind jedoch wasserunlösliche Polypropylenoxidpolyole und Polytetramethylenoxidpolyole mit einem Molgewicht von 500 - 3000 g/mol sowie deren Mischungen.

Gut geeignete Beispiele für Polyesterpolyole b) sind die an sind die bekannten Polykondensate aus Di- sowie gegebenenfalls Tri- und Tetraolen und Di- sowie gegebenenfalls Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopenthylglykolester, wobei die drei letztgenannten Verbindungen bevorzugt sind. Um eine Funktionalität < 2 zu erzielen können gegebenenfalls Polyole mit einer Funktionalität von 3 anteilig verwendet werden, beispielsweise Trimethylolpropan, Glycerin, Erythrit, Pentaerythrit, Trimethylolbenzol oder Trishydroxyethylisocyanurat zu nennen.

Als Dicarbonsäuren kommen beispielsweise in Frage Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure, 2,2-Dimethylbernsteinsäure. Anhydride dieser Säuren sind ebenfalls brauchbar, soweit sie existieren. Für die Belange der vorliegenden Erfmdung werden die Anhydride infolgedessen durch den Ausdruck "Säure" umfasst. Es können auch Monocarbonsäuren, wie Benzoesäure und Hexancarbonsäure verwendet werden, vorausgesetzt, dass die mittlere Funktionalität des Polyols ≥2 ist. Gesättigte aliphatische oder aromatische Säuren sind bevorzugt, wie Adipinsäure oder Isophthalsäure. Als gegebenenfalls in kleineren Mengen mitzuverwendende Polycarbonsäure sei hier Trimellitsäure genannt.

Hydroxycarbonsäuren, die als Reaktionsteilnehmer bei der Herstellung eines Polyesterpolyols mit endständigen Hydroxylgruppen mitverwendet werden können sind beispielsweise Hydroxycapronsäure, Hydroxybuttersäure, Hydroxydecansäure, Hydroxystearinsäure und dergleichen. Brauchbare Lactone sind u.a. ε-Caprolacton, Butyrolacton und Homologe.

Bevorzugt sind Polyesterpolyole b) auf Basis von Butandiol und/oder Neopentylglykol und/oder Hexandiol und/oder Ethylenglykol und/oder Diethylenglykol mit Adipinsäure und/oder Phthalsäure und/oder Isophthalsäure. Besonders bevorzugt sind Polyesterpolyole b) auf Basis von Butandiol und/oder Neopentylglykol und/oder Hexandiol mit Adipinsäure und/oder Phthalsäure.

Die in Frage kommenden Polycarbonatpolyole sind durch Reaktion von Kohlensäurederivaten, z.B. Diphenylcarbonat, Dimethylcarbonat oder Phosgen mit Diolen erhältlich. Als derartige Diole kommen z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutlyenglykol, Polybutylenglykole, Bisphenol A, Tetrabrombisphenol A, aber auch Lacton modifizierte Diole in Frage. Bevorzugt enthält die Diolkomponente 40 bis 100 Gew.-% 1,6-Hexandiol und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol ε-Caprolacton oder durch Veretherung von Hexandiol mit sich selbst zum Di- oder Trihexylenglykol erhalten werden. Auch Polyether-Polycarbonatpolyole können eingesetzt werden.

Bevorzugt sind Polycarbonatpolyole b) auf Basis von Dimethylcarbonat und Hexandiol und/oder Butandiol und/oder ε-Caprolacton. Ganz besonders bevorzugt sind Polycarbonatpolyole auf Basis von Dimethylcarbonat und Hexandiol und/oder ε-Caprolacton.

Insgesamt sind jedoch als Komponente b) Polyetherpolyole besonders bevorzugt.

Geeignete nichtionisch hydrophilierend wirkende Verbindungen c) sind z.B. Polyoxyalkylenether, die mindestens eine Hydroxy- oder Aminogruppe enthalten. Diese Polyether enthalten einen Anteil von 30 Gew.-% bis 100 Gew.-% an Bausteinen, die vom Ethylenoxid abgeleitet sind. In Frage kommen linear aufgebaute Polyether einer Funktionalität zwischen 1 und 2, aber auch Verbindungen der allgemeinen Formel (I), 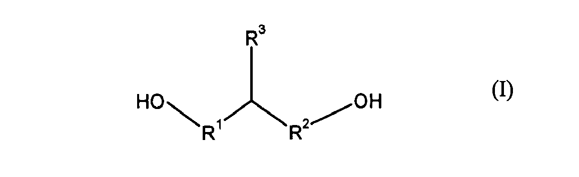 in welcher
- R¹ und R²: unabhängig voneinander jeweils einen zweiwertigen aliphatischen, cycloa- liphatischen oder aromatischen Rest mit 1 bis 18 C-Atomen, die durch Sau- erstoff und/oder Stickstoffatome unterbrochen sein können, bedeuten und
- R³: für einen alkoxyterminierten Polyethylenoxidrest steht.

Nichtionisch hydrophilierend wirkende Verbindungen c) sind beispielsweise auch einwertige, im statistischen Mittel 5 bis 70, bevorzugt 7 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4. Auflage, Band 19, Verlag Chemie, Weinheim S. 31-38).

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Die Molmasse Mₙ dieser Bausteine beträgt 300 g/mol bis 6000 g/mol, bevorzugt 500 g/mol bis 4000 g/mol und besonders bevorzugt 750 g/mol bis 3000 g/mol bei einer Funktionalität von 1.

Vorzugsweise liegt die Komponente c) in Mengen von 2 - 8 Gew.-%, besonders bevorzugt 3 - 7 Gew.-%, bezogen auf alle Aufbaukomponenten des Polyurethanpolymers vor.

Geeignete derartige nichtionisch hydrophilierende, monfunktionelle Verbindungen d) sind beispielsweise monofunktionelle Alkoxypolyethylenglycole wie z.B. Methoxypolyethylenglykole (MPEG Carbowax^{®} 2000 oder Methoxy PEG-40, Molgewichtsbereich 1800 bis 2200, The Dow Chemical Company), monofunktionelle Polyethermonoalkylether wie z.B. LB 25 aufgebaut aus Butanol und Ethylenoxid sowie Propylenoxid, mit einer mittleren Molmasse Mₙ von 2250 g/mol von Bayer Material Science, monofunktionelle Polyetheramine (Jeffamine^{®} M 1000, PO/EO mol-Verhältnis 3/19 und M 2070, PO/EO mol-Verhältnis 10/31, Huntsman Corp.).

Bevorzugt werden als Verbindung d) MPEG Carbowax^{®} 2000, LB 25 oder Jeffamine^{®} M 2070 eingesetzt. Besonders bevorzugt sind MPEG Carbowax^{®} 2000 oder LB 25.

Vorzugsweise liegt die Komponente e) in Mengen von 1 - 6 Gew.-%, besonders bevorzugt 1,5 - 5 Gew.-%, bezogen auf alle Aufbaukomponenten des Polyurethanpolymers vor.

Die Komponente e) enthält potentiell ionische Gruppen, die entweder kationischer oder anionischer Natur sein können. Kationisch, anionisch oder nichtionisch dispergierend wirkende Verbindungen sind solche, die beispielsweise Sulfonium-, Ammonium-, Phosphonium-, Carboxylat-, Sulfonat-, Phosphonat-Gruppen oder die Gruppen, die durch Salzbildung in die vorgenannten Gruppen überführt werden können (potentiell ionische Gruppen) oder Polyethergruppen enthalten und durch vorhandene isocyanatreaktive Gruppen in die Makromoleküle eingebaut werden können. Bevorzugt geeignete isocyanatreaktive Gruppen sind Hydroxyl- und Amingruppen.

Geeignete ionische oder potentiell ionische Verbindungen d) sind z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono-und Diaminophosphonsäuren und ihre Salze wie Dimethylolpropionsäure, Dimethylolbuttersäure, Hydroxypivalinsäure, N-(2-Aminoethyl)-β-alanin, 2-(2-Amino-ethylamino)-ethansulfonsäure, Ethylendiamin-propyl- oder butylsulfonsäure, 1,2- oder 1,3-Propylendiamin-βethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III) sowie in kationische Gruppen überführbare Bausteine wie N-Methyl-diethanolamin als hydrophile Aufbaukomponenten. Bevorzugte ionische oder potentielle ionische Verbindungen sind solche, die über Carboxy- oder Carboxylat- und/oder Sulfonatgruppen und/oder Ammoniumgruppen verfügen und eine Funktionalität von 1,9 bis 2,1 aufweisen. Besonders bevorzugte ionische Verbindungen weisen eine Hydroxyfunktionalität von 1,9 bis 2,1 auf und enthalten Carboxylatgruppen als ionische oder potentiell ionische Gruppen, wie die Salze der Dimethylolpropionsäure oder Dimethylolbuttersäure.

Die zur Kettenverlängerung eingesetzten Polyamine e) weisen bevorzugt eine Funktionalität zwischen 1 bis 2 auf und sind z.B. Di- oder Polyamine sowie Hydrazide, z.B. Ethylendiamin, 1,2- und 1,3-Diaminopropan, 1,4-Diaminobutan, 1,6-Diaminohexan, Isophorondiamin, Isomerengemisch von 2,2,4- und 2,4,4-Trimethylhexamethylendiamin, 2-Methylpentamethylendiamin, Diethylentriamin, 1,3- und 1,4-Xylylendiamin, □.□.□.'□'-Tetramethyl-1,3- und -1,4-xylylendiamin und 4,4-Diaminodicyclohexylmethan, Dimethylethylendiamin, Hydrazin oder Adipinsäuredihydrazid.

Als Komponente e) kommen prinzipiell auch Verbindungen in Betracht, die aktiven Wasserstoff mit gegenüber NCO-Gruppen unterschiedlicher Reaktivität enthalten, wie Verbindungen, die neben einer primären Aminogruppe auch sekundäre Aminogruppen oder neben einer Aminogruppe (primär oder sekundär) auch OH-Gruppen aufweisen. Beispiele hierfür sind primäre/sekundäre Amine, wie 3-Amino-1-Methylaminopropan, 3-Amino-1-Ethylaminopropan, 3-Amino-1-cyclohexylaminopropan, 3-Amino-1-methylaminobutan, weiterhin Alkanolamine wie N-Aminoethylethanolamin, Ethanolamin, 3-Aminopropanol oder Neopentanolamin.

Bevorzugt sind Diethanolamin und/oder Hydrazin und/oder Isophorondiamin (IPDA) und/oder Ethylendiamin. Besonders bevorzugt sind Hydrazin und/oder Isophorondiamin und/oder Ethylendiamin.

Vorzugsweise liegt die Komponente e) in Mengen von 0,2 - 2,5 Gew.-%, besonders bevorzugt 0,3 - 2 Gew.-%, bezogen auf alle Aufbaukomponenten des Polyurethanpolymers vor.

Gegebenenfalls einsetzbare Neutralisationsamine f) sind im Falle anionischer Gruppen Basen wie Ammoniak, Ammoniumcarbonat oder -hydrogencarbonat, Trimethylamin, Triethylamin, Tributylamin, Diisopropylethylamin, Dimethylethanolamin, Diethylethanolamin, Triethanolamin, Alkalihydroxide oder -carbonate, bevorzugt Triethylamin, Triethanolamin, Dimethylethanolamin oder Diisopropylethylamin, ganz besonders bevorzugt Triethylamin. Die Stoffmenge der Basen liegt zwischen 30 und 100%, bevorzugt zwischen 40 und 90% der Stoffmenge der anionischen Gruppen. Im Falle kationischer Gruppen eignen sich Schwefelsäure und deren Dimethylester, Bernsteinsäure, Phosphorsäure und Milchsäure. Bevorzugt werden Milchsäure und Phosphorsäure eingesetzt, besonders bevorzugt Phosphorsäure.

Die gegebenenfalls zum Aufbau der Polyurethanharze einsetzbaren niedermolekularen Polyole g) bewirken in der Regel eine Versteifung und/oder eine Verzweigung der Polymerkette. Das Molekulargewicht liegt bevorzugt zwischen 62 und 200 und ihre Funktionalität ist bevorzugt 2 bis 3. Geeignete Polyole c) können aliphatische, alicyclische oder aromatische Gruppen enthalten. Genannt seien hier beispielsweise die niedermolekularen Polyole mit bis zu etwa 20 Kohlenstoffatomen je Molekül, wie z.B. Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Hydrochinondihydroxyethylether, Bisphenol A (2,2-Bis(4-hydroxyphenyl)propan), hydriertes Bisphenol A (2,2-Bis(4-hydroxycyclohexyl)propan) sowie deren Mischungen, sowie Trimethylolpropan, Glycerin oder Pentaerythrit. Auch Esterdiole wie z.B. □-Hydroxybutyl-□-hydroxy-capronsäureester, □-Hydroxyhexyl-□-hydroxybuttersäureester, Adipinsäure-(□-hydroxyethyl)ester oder Terephthalsäure-bis(□-hydroxyethyl)-ester können verwendet werden. Bevorzugt wird Hexandiol und/oder Trimethylolpropan und/oder Butandiol. Besonders bevorzugt sind Trimethylolpropan und/oder Butandiol.

Zur Herstellung der erfindungsgemäßen PU-Dispersionen können alle aus dem Stand der Technik bekannten Verfahren wie z.B. Prepolymer-Mischverfahren, Acetonverfahren oder Schmelzdispergierverfahren verwendet werden. Bevorzugt wird die PU-Dispersion nach dem Aceton-Verfahren hergestellt.

Für die Herstellung der PU-Dispersion nach dem Aceton-Verfahren werden üblicherweise die Bestandteile b), c), d) gegebenenfalls g) und die Polyisocyanatkomponente a) zur Herstellung eines isocyanatfunktionellen Polyurethan-Prepolymers ganz oder teilweise vorgelegt und gegebenenfalls mit einem mit Wasser mischbaren aber gegenüber Isocyanatgruppen inerten Lösungsmittel wie beispielsweise Aceton oder Butanon verdünnt und die so erhaltene Mischung auf Temperaturen im Bereich von 50 bis 120°C aufgeheizt wird. Zur Beschleunigung der Isocyanatadditionsreaktion können die in der Polyurethan-Chemie bekannten Katalysatoren eingesetzt werden. Bevorzugt ist Dibutylzinndilaurat.

Geeignete Lösungsmittel sind die üblichen aliphatischen, ketofunktionellen Lösemittel wie z.B. Aceton, Butanon, die nicht nur zu Beginn der Herstellung, sondern gegebenenfalls in Teilen auch später zugegeben werden können. Bevorzugt sind Aceton oder Butanon.

Anschließend werden die gegebenenfalls zu Beginn der Reaktion noch nicht zugegebenen Bestandteile von a) - d) und ggf. g) zudosiert.

Bei der Herstellung des Polyurethan-Prepolymers beträgt das Stoffmengenverhältnis von Isocyanatgruppen zu Isocyanatreaktiven Gruppen 1,0 bis 3,5, bevorzugt 1,1 bis 3,0, besonders bevorzugt 1,1 bis 2,0.

Die Umsetzung der Komponenten a) - d) und ggf. g) zum Prepolymer erfolgt teilweise oder vollständig, bevorzugt aber vollständig. Es werden so Polyurethan-Prepolymere, die freie Isocyanatgruppen enthalten, in Substanz oder in Lösung erhalten.

Im Anschluss wird in einem weiteren Verfahrensschritt, falls noch nicht oder nur teilweise geschehen das erhaltene Prepolymer mit Hilfe von aliphatischen Ketonen wie Aceton oder Butanon gelöst. Nach vollständiger Lösung erfolgt gegebenenfalls die Neutralisation der potentiell ionischen Verbindung d) mit einem Neutralisationsamin f) zur vollständigen oder teilweisen Versalzung von d).

Anschließend werden mögliche NH₂- und/oder NH-funktionelle Komponenten e) mit den noch verbliebenen Isocyanatgruppen umgesetzt. Diese Kettenverlängerung/-terminierung kann dabei entweder in Lösungsmittel vor dem Dispergieren, während des Dispergierens oder in Wasser nach dem Dispergieren durchgeführt werden. Bevorzugt wird die Kettenverlängerung vor der Dispergierung in Wasser durchgeführt.

Wenn Wasser oder organische Lösemittel als Verdünnungsmittel mitverwendet werden so beträgt der Verdünnungsmittelgehalt bevorzugt 70 bis 95 Gew.-%.

Die Herstellung der erfindungsgemäßen Polyurethanharnstoff-Dispersion aus den Prepolymeren erfolgt im Anschluss an die Kettenverlängerung. Dazu wird das gelöste und kettenverlängerte Polyurethanpolymer gegebenenfalls unter starker Scherung, wie z.B. starkem Rühren, entweder in das Dispergierwasser eingetragen oder es wird umgekehrt das Dispergierwasser zu den Prepolymerlösungen gerührt. Bevorzugt wird das Wasser in das gelöste Prepolymer gegeben.

Das in den Dispersionen nach dem Dispergierschritt noch enthaltene Lösemittel wird üblicherweise anschließend destillativ entfernt. Eine Entfernung bereits während der Dispergierung ist ebenfalls möglich.

Der Feststoffgehalt der erfindungsgemäßen Polyurethanpolyhanrstoff-Dispersion liegt zwischen 20 bis 70 Gew.-%, bevorzugt 25 bis 60 Gew.-% und besonders bevorzugt zwischen 30 bis 50 Gew.-%.

Weiterer Gegenstand der Erfindung ist die Verwendung der erfindungsgemäßen Polyurethanpolyharnstoff-Dispersionen zur Herstellung von Beschichtungsmitteln für Holz, Kunststoff, Metall, Glas, Textilien, Leder, Papier sowie Fasern wie z.B. Glasfasern, Kunststofffasern und Graphitfasern, bevorzugt als wässriger Haftstrich zur Herstellung von Textilbeschichtungen. Die erfindungsgerechten Dispersionen können auf alle möglichen Gewebe, wie Webwaren, Gewirke, Vliesstoffe, gefüllte Vliese und Maschenwaren appliziert werden.

Die wässrigen Beschichtungsmittel, enthaltend die erfindungsgemäßen Polyurethanpolyharnstoff-Dispersionen, können als weitere Komponente Hilfs- und Zusatzstoffe enthalten. Dies können Cobinder, Verdicker, Haftvermitteler, Gleitmittel, Benetzungsadditive, Farbstoffe, Licht- und Alterungsschutzmittel, Pigmente, Füller, Verlaufshilfsmittel, Antistatika, UV-Absorber, Filmbildungshilfsmittel, Entschäumer, Flammschutzmittel, Biozide, oberflächenaktive Verbindungen oder Weichmacher sowie Licht- und Alterungsschutzmittel sein.

In der Formulierung können ferner geeignete Vernetzer, wie z.B. Polyisocyanate, blockierte Polyisocyanate, Melaminvernetzer, Carbodiimide, Polyaziridine enthalten sein.

Die erfindungsgemäßen Polyurethanpolyharnstoff-Dispersionen können als Bestandteil in wasserbasierten Lacken zu Beschichtung von Oberflächen eingesetzt werden. Zu diesem Zweck werden die erfindungsgemäßen Polyurethanpolyharnstoff-Dispersionen mit weiteren Komponenten wie z.B. wässrige Dispersionen auf Polyesterbasis, auf Polyurethanbasis, auf Polyurethan-Polyacrylatbasis, auf Polyacrylatbasis, auf Polyetherbasis, auf Polyester-Polyacrylatbasis, auf Alkydharzbasis, auf Polymerisatbasis, auf Polyamid/imidbasis oder auf Polyepoxidbasis abgemischt.

Die Herstellung der Beschichtung kann nach den unterschiedlichen Spritzverfahren wie beispielsweise Luftdruck-, Airless- oder Elektrostatik-Spritzverfahren unter Verwendung von Ein- oder gegebenenfalls Zweikomponenten-Spritzanlagen erfolgen. Die Lacke und Beschichtungsmittel, enthaltend die erfindungsgemäßen Polyurethanpolyharnstoff-Dispersionen, können jedoch auch nach anderen Methoden, beispielsweise durch Streichen, Rollen, Sprühen, Tauchen, Spritzen, Drucken oder Rakeln appliziert werden.

Bei Verwendung der erfindungsgemäßen Dispersionen in der Beschichtung von textilen Produkten können die dem Fachmann bekannten Verfahren verwendet werden. Dazu zählen unter anderem die Direktbeschichtung, Umkehrbeschichtung, Laminierung und Trockenlaminierung. Anschließend wird das beschichtete Textil vorteilhafterweise bei Temperaturen von 70 bis 160 °C ausgehärtet und bildet hierbei einen Haftstrich auf dem textilen Flächengebilde aus. Noch bevorzugter findet die Aushärtung in mehreren, vorzugsweise drei Temperaturzonen von 70 °C bis 90 °C (erste Temperaturzone), 90 °C bis 110 °C (zweite Temperaturzone) und 140 °C bis 160 °C (dritte Temperaturzone) statt.

### Beispiele:

Verwendete Rohstoffe:
   Desmodur^{®} 44 M Flakes = 4,4'-MDI, (CAS 101-68-8, Bayer MaterialScience AG, DE)
   Desmodur^{®} T 80 = 2,4- und 2,6-Toluylendiisocyanat (TDI) im Verhältnis von 80 : 20 (CAS 26471-62-5, Bayer MaterialScience AG, DE)
   Desmodur^{®} LS 2424 = Mischung aus 2,4'-MDI und 4,4'-MDI, ca. 1:1, Bayer MaterialScience AG, DE
   Desmodur^{®} XP 2410 = aliphatisches Polyisocyanat, Bayer MaterialScience AG, DE
   Desmodur^{®} 3100 = aliphatisches Polyisocyanat, Bayer MaterialScience AG, DE
   Impranil^{®} DLU = aliphatische Polyurethanharnstoff-Dispersion, Bayer MaterialScience AG, DE
   Impranil^{®} DLC-F = aliphatische Polyurethanhamstoff-Dispersion, Bayer MaterialScience AG, DE
   Impranil^{®} LP RSC 4002 = aromatische Polyurethanharnstoffdispersion, Bayer MaterialScience AG, DE
   Borchigel ALA = Verdicker auf Polyacrylat-Basis, Borchers, DE
   Euderm White = Farbpigment, Bayer AG, DE
   Byk 333 = Verlaufsmittel, BYK, DE
   Ceraflor 920 = Mattierungsmittel auf Polymerbasis, BYK, DE
   Desmophen^{®} LP 112 = Polypropylenoxid-Diol einer mittleren Molmasse Mₙ von 1000 g/mol, (Bayer MaterialScience AG, DE)
   Desmophen^{®} LB 25 = Monofunktioneller Polyether auf Ethylenoxid/Propylenoxid-Basis mit einem Ethylenoxidanteil von 84%, Mₙ = 2250 g·mol⁻¹ (Bayer Materialscience AG, DE)
   Desmophen^{®} P 200 H = Polyester-Diol, aufgebaut aus Phtalsäure und Hexandiol mit einer mittleren Molmasse Mₙ von 2000 g/mol, (Bayer MaterialScience AG, DE)
   Desmophen^{®} PE 84 H = Polyester-Diol, aufgebaut aus Adipinsäure und Hexandiol mit einer mittleren Molmasse Mₙ von 840 g/mol, (Bayer MaterialScience AG, DE)
   AAS = Diaminosulfonat, 45%ig in Wasser. H₂N-CH₂-CH₂-NH-CH₂-CH₂SO₃Na (Bayer MaterialScience AG, DE).
   DMPS = Dimethylolpropionsäure, (CAS 4767-03-7, Aldrich, DE)
   IPDA = Isophorondiamin, (CAS 4767-03-7, Aldrich, DE)
   TEA = Triethylamin, (CAS 121-44-8, Aldrich, DE)

Verwendete Methoden:

Die Bestimmung der Festkörpergehalte erfolgte nach DIN-EN ISO 3251.

NCO-Gehalte wurden, wenn nicht ausdrücklich anders erwähnt, volumetrisch gemäß DIN-EN ISO 11909 bestimmt.

Teilchengröße: Die Bestimmung der mittleren Teilchengröße (MTG) erfolgte mittels Laser-Korrelations-Spektroskopie (Gerät: Malvern Zetasizer 1000, Malvern Instruments LTD), es sind die Z-Mittel angegeben.

### Herstellung der Dispersionen:

### Beispiel 1

304,6 g des Polyetherpolyols LP 112 27,0 g des monofunktionellen Hydrophilierungsmittels LB25 und 16,1 g DMPS werden mit 165 g 4,4'-MDI bei 70 °C versetzt und anschließend zum Präpolymer umgesetzt bis der theoretische NCO-Wert (NCO-1 = 3,76%) erreicht ist. Daraufhin werden bei 80 °C 911 g Aceton zugeführt und auf 40 °C abgekühlt und das Präpolymer gelöst. Nach vollständiger Lösung wird eine Lösung von 12,1 g TEA in 56,5 g Aceton zur Neutralisation zugegeben und weitere 15 min. gerührt. Dann erfolgt die Zugabe von 5,2 g des Kettenverlängerers IPDA in 18,7 g Wasser und es wird 30 min. gerührt. Das Produkt wird in 1218 g Wasser dispergiert und anschließend wird das Aceton bei 120 mbar bei 40 °C abdestilliert. Es entsteht eine wässrige Dispersion eines Feststoffgehalts von 30,0% mit einem pH-Wert von 8,8 und einer mittleren Teilchengröße von 145 nm. Die Dispersion erweist sich als lagerstabil und es bildet sich kein Bodensatz innerhalb von vier Wochen Lagerung bei Raumtemperatur.

### Beispiel 2

314,9 g des Polyetherpolyols LP 112 25,9 g des monofunktionellen Hydrophilierungsmittels LB25 und 15,4 g DMPS werden mit 158,1 g 4,4'-MDI bei 70 °C versetzt und anschließend zum Präpolymer umgesetzt bis der theoretische NCO-Wert (NCO-1 = 3,22%) erreicht ist. Daraufhin werden bei 80 °C 914 g Aceton zugeführt und auf 40 °C abgekühlt und das Präpolymer gelöst. Nach vollständiger Lösung wird eine Lösung von 11,6 g TEA in 54,1 g Aceton zur Neutralisation zugegeben und weitere 15 min. gerührt. Dann erfolgt die Zugabe von 1,1 g des Kettenverlängerers IPDA in 3,9 g Wasser und es wird 30 min. gerührt. Das Produkt wird in 1226 g Wasser dispergiert und anschließend wird das Aceton bei 120 mbar bei 40 °C abdestilliert. Es entsteht eine wässrige Dispersion eines Feststoffgehalts von 30,0% mit einem pH-Wert von 8,8 und einer mittleren Teilchengröße von 120 nm. Die Dispersion erweist sich als lagerstabil und es bildet sich kein Bodensatz innerhalb von vier Wochen Lagerung bei Raumtemperatur.

### Beispiel 3

323 g des Polyetherpolyols LP 112 24,8 g des monofunktionellen Hydrophilierungsmittels LB25 und 14,7 g DMPS werden mit 151,3 g 4,4'-MDI bei 70 °C versetzt und anschließend zum Präpolymer umgesetzt bis der theoretische NCO-Wert (NCO-1 = 2,72%) erreicht ist. Daraufhin werden bei 80 °C 914 g Aceton zugeführt und auf 40 °C abgekühlt und das Präpolymer gelöst. Nach vollständiger Lösung wird eine Lösung von 11,1 g TEA in 51,8 g Aceton zur Neutralisation zugegeben und weitere 15 min. gerührt. Dann erfolgt die Zugabe von 4,8 g des Kettenverlängerers IPDA in 17,2 g Wasser und es wird 30 min. gerührt. Das Produkt wird in 1219 g Wasser dispergiert und anschließend wird das Aceton bei 120 mbar bei 40 °C abdestilliert. Es entsteht eine wässrige Dispersion eines Feststoffgehalts von 31,0% mit einem pH-Wert von 8,8 und einer mittleren Teilchengröße von 110 nm. Die Dispersion erweist sich als lagerstabil und es bildet sich kein Bodensatz innerhalb von vier Wochen Lagerung bei Raumtemperatur.

### Beispiel 4

342 g des Polyetherpolyols LP 112 23,1 g des monofunktionellen Hydrophilierungsmittels LB25 und 13,7 g DMPS werden mit 140,9 g 4,4'-MDI bei 70 °C versetzt und anschließend zum Präpolymer umgesetzt bis der theoretische NCO-Wert (NCO-1 = 1,84%) erreicht ist. Daraufhin werden bei 80 °C 924 g Aceton zugeführt und auf 40 °C abgekühlt und das Präpolymer gelöst. Nach vollständiger Lösung wird eine Lösung von 10,4 g TEA in 48,2 g Aceton zur Neutralisation zugegeben und weitere 15 min. gerührt. Dann erfolgt die Zugabe von 4,5 g des Kettenverlängerers IPDA in 16 g Wasser und es wird 30 min. gerührt. Das Produkt wird in 1231 g Wasser dispergiert und anschließend wird das Aceton bei 120 mbar bei 40 °C abdestilliert. Es entsteht eine wässrige Dispersion eines Feststoffgehalts von 30,2% mit einem pH-Wert von 8,9 und einer mittleren Teilchengröße von 120 nm. Die Dispersion erweist sich als lagerstabil und es bildet sich kein Bodensatz innerhalb von vier Wochen Lagerung bei Raumtemperatur.

### Beispiel 5

335,7 g des Polyesterpolyols P 200 H, 29,9 g des monofunktionellen Hydrophilierungsmittels LB25 werden mit 60,2 g 4,4'-MDI bei 80 °C versetzt und anschließend zum Präpolymer umgesetzt bis der theoretische NCO-Wert (NCO-1 = 1,31%) erreicht ist. Daraufhin werden bei 80 °C 757 g Aceton zugeführt und auf 40 °C abgekühlt und das Präpolymer gelöst. Nach vollständiger Lösung wird eine Lösung von 4,5 g IPDA in 8 g Aceton zur Kettenverlängerung zugegeben und weitere 20 min. gerührt. Dann erfolgt die Zugabe von 8,4 g AAS mit weiteren 10,5 g Wasser und es wird 10 min. gerührt. Das Produkt wird in 636 g Wasser dispergiert und anschließend wird das Aceton bei 120 mbar bei 40 °C abdestilliert. Es entsteht eine wässrige Dispersion eines Feststoffgehalts von 36% mit einem pH-Wert von 7,2 und einer mittleren Teilchengröße von 245 nm. Die Dispersion erweist sich als lagerstabil und es bildet sich kein Bodensatz innerhalb von vier Wochen Lagerung bei Raumtemperatur.

### Beispiel 6

271,1 g des Polyesterpolyols PE 84 H, 28,2 g des monofunktionellen Hydrophilierungsmittels LB25 werden mit 131,4 g 4,4'-MDI bei 80 °C versetzt und anschließend zum Präpolymer umgesetzt bis der theoretische NCO-Wert (NCO-1 = 2,54%) erreicht ist. Daraufhin werden bei 80 °C 734 g Aceton zugeführt und auf 40 °C abgekühlt und das Präpolymer gelöst. Nach vollständiger Lösung wird eine Lösung von 8,4 g IPDA in 15 g Aceton zur Kettenverlängerung zugegeben und weitere 20 min. gerührt. Dann erfolgt die Zugabe von 15,9 g AAS mit weiteren 19,8 g Wasser und es wird 10 min. gerührt. Das Produkt wird in 614 g Wasser dispergiert und anschließend wird das Aceton bei 120 mbar bei 40 °C abdestilliert. Es entsteht eine wässrige Dispersion eines Feststoffgehalts von 40,2% mit einem pH-Wert von 7,4 und einer mittleren Teilchengröße von 275 nm. Die Dispersion erweist sich als lagerstabil und es bildet sich kein Bodensatz innerhalb von vier Wochen Lagerung bei Raumtemperatur.

### Beispiel 7 (nicht erfindungsgemäß)

198,3 g des Polyetherpolyols LP 112 15,2 g des monofunktionellen Hydrophilierungsmittels LB25 und 9,0 g DMPS werden mit 92,8 g Desmodur LS 2424 bei 70 °C versetzt und anschließend zum Präpolymer umgesetzt bis der theoretische NCO-Wert (NCO-1 = 2,72%) erreicht ist. Daraufhin werden bei 80 °C 561 g Aceton zugeführt und auf 40 °C abgekühlt und das Präpolymer gelöst. Nach vollständiger Lösung wird eine Lösung von 6,8 g TEA in 31,8 g Aceton zur Neutralisation zugegeben und weitere 15 min. gerührt. Dann erfolgt die Zugabe von 2,9 g des Kettenverlängerers IPDA in 10,5 g Wasser und es wird 30 min. gerührt. Das Produkt wird in 748 g Wasser dispergiert und anschließend wird das Aceton bei 120 mbar bei 40 °C abdestilliert. Es entsteht eine wässrige Dispersion eines Feststoffgehalts von 29,9% mit einem pH-Wert von 8,5 und einer mittleren Teilchengröße von 350 nm. Die Dispersion erweist sich als nicht lagerstabil und es bildet sich ein leichter Bodensatz innerhalb von vier Wochen Lagerung bei Raumtemperatur.

### Beispiel 8 (nicht erfindungsgemäß)

276 g des Polyetherpolyols LP 112 und 21,4 g DMPS werden mit 127,2 g 4, 4'-MDI bei 70 °C versetzt und anschließend zum Präpolymer umgesetzt bis der theoretische NCO-Wert (NCO-1 = 2,82%) erreicht ist. Daraufhin werden bei 80 °C 740 g Aceton zugeführt und auf 40 °C abgekühlt und das Präpolymer gelöst. Nach vollständiger Lösung wird eine Lösung von 9,4 g TEA in 43,5 g Aceton zur Neutralisation zugegeben und weitere 15 min. gerührt. Dann erfolgt die Zugabe von 4 g des Kettenverlängerers IPDA in 14,4 g Wasser und es wird 30 min. gerührt. Eine Dispergierung mit 630 g Wasser konnte nicht durchgeführt werden, da sich nach der Zugabe des Wassers größere Klumpen am Rührer bildeten.

### Beispiel 9 (nicht erfindungsgemäß)

293,4 g des Polyetherpolyols LP 112 und 25,7 g des monofunktionellen Hydrophilierungsmittels LB25 werden mit 103,1 g 4, 4'-MDI bei 70 °C versetzt und anschließend zum Präpolymer umgesetzt bis der theoretische NCO-Wert (NCO-1 = 2,26%) erreicht ist. Daraufhin werden bei 80 °C 751 g Aceton zugeführt und auf 40 °C abgekühlt und das Präpolymer gelöst. Nach vollständiger Lösung wird eine Lösung von 3,3 g des Kettenverlängerers IPDA in 11,7 g Wasser und es wird 30 min. gerührt. Die Zugabe von 627 g Wasser führte zu einer irreversiblen Verdickung des Reaktionsansatzes und der Versuch wurde abgebrochen.

### Beispiel 10 (nicht erfindungsgemäß)

276 g des Polyetherpolyols LP 112 und 21,4 g DMPS werden mit 127,2 g 4, 4'-MDI bei 70 °C versetzt und anschließend zum Präpolymer umgesetzt bis der theoretische NCO-Wert (NCO-1 = 2,82%) erreicht ist. Daraufhin werden bei 80 °C 740 g Aceton zugeführt und auf 40 °C abgekühlt und das Präpolymer gelöst. Nach vollständiger Lösung wird eine Lösung von 9,4 g TEA in 43,5 g Aceton zur Neutralisation zugegeben und weitere 15 min. gerührt. Dann erfolgt die Zugabe von 4 g des Kettenverlängerers IPDA in 14,4 g Wasser und es wird 30 min. gerührt. Eine Dispergierung mit 630 g Wasser konnte nicht durchgeführt werden, da sich nach der Zugabe des Wassers größere Klumpen am Rührer bildeten.

### Beispiel 11 (nicht erfindungsgemäß, Vorschrift nach Macromol. Symp. 2004, 216, Seite 229-239)

Anstelle des Text verwendeten Polyesters aus Adipinsäure und Ethylenglykol mit einer Molmasse Mₙ von 1000 g/mol wurde das Polypropylenoxid-Diol LP 112 verwendet. Das dabei hergestellte Präpolymer war aber auch unter Rückfluss nicht vollständig in Aceton löslich und es blieben starke Wandanhaftungen zurück. Für einen industriellen Prozess erscheint dieses Verfahren nicht anwendbar.

### Anwendungbeispiele 1-6:

Die Beschichtungsversuche auf einem textilen Träger erfolgten im Transferverfahren auf einer Pilotanlage der Firma Isotex mit einem Rakelauftrag. Als Substrat wurde ein Polyestergewebe verwendet. Die Trocknung erfolgte unter Heissluft in einem Trockenkanal mit drei unterschiedlichen Temperaturzonen mit zunehmender Temperatur (80 °C, 100 °C, 150 °C).

### a) Finish

Tabelle 1 zeigt die Zusammensetzung der Finishstriche, die zur Herstellung der Laminate 1 bis 6 eingesetzt wurden:

**Tabelle 1,**

| Finish | 1 | 2 | 3 | 4 | 5* | 6* |
|---|---|---|---|---|---|---|
| Imrpanil DLC-F | 1000 | 1000 | 1000 | 1000 | 1000 | 1000 |
| Byk 333 | 3 | 3 | 3 | 3 | 3 | 3 |
| Bayhydur 3100 | 15 | 15 | 15 | 15 | 15 | 15 |
| Ceraflor 920 | 20 | 20 | 20 | 20 | 20 | 20 |
| Wasser | 150 | 150 | 150 | 150 | 150 | 150 |
| Euderm White | 100 | 100 | 100 | 100 | 100 | 100 |
| Borchigel ALA | 30 | 30 | 30 | 30 | 30 | 30 |

| | | | | | | |
|---|---|---|---|---|---|---|
| * erfindungsgemäß | | | | | | |

Impranil DLC-F wird in einem Behälter vorgelegt, unter Rühren wird Desmodur 3100 zugegeben und es werden sukzessive alle weiteren Komponenten eingerührt bis eine homogene Formulierung entsteht. Mit Borchigel ALA unter Rühren auf Streichviskosität verdickt. Die Beschichtung erfolgt mt einer Laufgeschwinidigkeit von 2,0 m/min bei einem Rakelspalt von 0,25 mm ei einem Flächenauftrag von 61 g/m². Die Trocknung erfolgt in drei Temperaturzonen von 80 °C, 100 °C und 150 °C.

### b) Zwischenstrich

Tabelle 2 zeigt die Zusammensetzung der Zwischenstriche, die zur Herstellung der Laminate 1 bis 6 eingesetzt wurden:

**Tabelle 2,**

| Zwischen | 1 | 2 | 3 | 4 | 5* | 6* |
|---|---|---|---|---|---|---|
| Imrpanil DLU | 1000 | 1000 | 1000 | 1000 | 1000 | 1000 |
| Euderm | 15 | 15 | 15 | 15 | 15 | 15 |
| White | | | | | | |
| Bayhydur 3100 | 100 | 100 | 100 | 100 | 100 | 100 |
| Borchigel ALA | 30 | 30 | 30 | 30 | 30 | 30 |

| | | | | | | |
|---|---|---|---|---|---|---|
| * erfindungsgemäß | | | | | | |

Zur Herstellung der Zwischenstriche wird Impranil DLU in einem Behälter vorgelegt, danach werden unter Rühren Euderm White und Bayhydur 3100 zugegeben und anschließend unter Zugabe von Borchigel ALA auf Streichviskosität verdickt. Die Beschichtung erfolgt mt einer Laufgeschwinidigkeit von 2,0 m/min bei einem Rakelspalt von 0,20 mm und einem Flächenauftrag von 90 g/m². Die Trocknung erfolgt in drei Temperaturzonen von 80 °C, 100 °C und 150 °C.

### 3) Haftstrich

Tabelle 3 zeigt die Zusammensetzung der Hafstriche, die zur Herstellung der Laminate 1 bis 6 eingesetzt wurden:

**Tabelle 3,**

| Haft | 1 | 2 | 3 | 4 | 5* | 6* |
|---|---|---|---|---|---|---|
| Imrpanil DLU | 1000 | 1000 | | | | |
| Impranil LP RSC 4002 | | | 1000 | 1000 | | |
| Beispiel 3 | | | | | 1000 | 1000 |
| Desmodur XP 2410 | 30 | 50 | 30 | 50 | 30 | 50 |
| Borchigel ALA | 20 | 20 | 10 | 10 | 10 | 10 |

| | | | | | | |
|---|---|---|---|---|---|---|
| * erfindungsgemäß | | | | | | |

Zur Herstellung der Haftstriche werden die Polyurethanharnstoffdispersionen vorgelegt und unter Rühren mit dem Polyisocyanat XP 2410 homogem vermischt. Anschließend wird mit Borchigel ALA auf Streichviskosität verdickt. Die Beschichtung erfolgt mit einer Laufgeschwindigkeit von 2,0 m/min bei einem Rakelspalt von 0,12 mm (1 und 2) bzw. 0,17 mm (3-6) und einem Flächenauftrag von 55 g/m² (1 und 2), 42 g/m² (3 und 4) und 45 g/m² (5* und 6*) beschichtet. Die Trocknung erfolgt in drei Temperaturzonen von 80 °C, 100 °C und 150 °C.

Die Trockenhaftung der wie oben dargestellten Laminate wird mit einem Gerät des Typs Z 1.0/TH1 S der Firma Zwick untersucht. Die Prüfung erfolgt an Probenkörpern der Größe 200 mm x 15 mm mit einer Zuggeschwindigkeit von 100 mm pro Minute. Dazu wird ein mit der Beschichtung ausgerüsteter Baumwollstreifen auf die Prüffläche bei einer Temperatur von 180 °C gleichmäßig aufgebügelt, bis eine Verklebung bzw. Verschmelzung erkennbar ist. Vor der Prüfung wird der Probekörper mindestens 24 h ausreagieren gelassen. Die Ergebnisse sind in Tabelle 4 zu finden, es ist jeweils der Mittelwert aus zwei Messungen angegeben:

| | 1 | 2 | 3 | 4 | 5* | 6* |
|---|---|---|---|---|---|---|
| Haftung (N / 2,5 cm) | 51,0 | 44,5 | 45,0 | 50 | 71,5 | 76,0 |

Man erkennt, dass die erfindungsgemäßen Dispersionen zu einer signifikant höheren Trockenhaftung führen.

## Patentansprüche

1. Wässrige Polyurethan-Dispersionen enthaltend ein Polyurethanpolymer bestehend aus
a) 5 - 55 Gew.-% 4,4'-Diphenylmethandiisocyanat,
b) 43,4 - 75 Gew.-% ein oder mehrere Polyhydroxyverbindungen einer Molmasse Mₙ von 400 g/mol bis 8000 g/mol einer Funktionalität von 1,5 bis 6,
c) 1 - 10 Gew.-% ein oder mehrere isocyanatreaktive nichtionische Hydrophilierungsmittel,
d) 0,5 - 7 Gew.-% ein oder mehrere ionisch oder potentiell ionische Hydrophilierungsmittel,
e) 0,1 - 3,0 Gew.-% ein oder mehrere Polyaminverbindungen mit einer Molmasse von 32 - 400 g/mol,
f) gegebenenfalls ein Neutralisationsamin
g) gegebenenfalls Polyhydroxyverbindungen einer Funktionalität von 2-3 und einer mittleren Molmasse Mₙ von 62 - 200 g/mol,
wobei sich die Mengenangaben auf alle Aufbaukomponenten des Polyurethanpolymers beziehen.

2. Wässrige Polyurethan-Dispersion nach Anspruch 1, **dadurch gekennzeichnet, dass** die Komponente a) in Mengen von 13,5 - 48 Gew.-% vorliegt.

3. Wässrige Polyurethan-Dispersion nach Anspruch 1, **dadurch gekennzeichnet, dass** die Komponente b) in Mengen von 48,8 - 70 Gew.-% vorliegt.

4. Wässrige Polyurethan-Dispersion nach Anspruch 1, **dadurch gekennzeichnet, dass** die Komponente c) in Mengen von 1 - 6 Gew.-% vorliegt.

5. Wässrige Polyurethan-Dispersion nach Anspruch 1, **dadurch gekennzeichnet, dass** die Komponente d) in Mengen von 0,2 - 2,5 Gew.-% vorliegt.

6. Wässrige Polyurethan-Dispersion nach einem oder mehreren der Ansprüche 1 bis 5, **dadurch gekennzeichnet, dass** das Stoffmengenverhältnis von Isocyanatgruppen zu Isocyanatreaktiven Gruppen 1,0 bis 3,5 beträgt.

7. Wässrige Polyurethan-Dispersion nach einem oder mehreren der Ansprüche 1 bis 6, **dadurch gekennzeichnet, dass** sie einen Festkörpergehalt im Bereich von 20 - 60 Gew.-% aufweist.

8. Wässrige Polyurethan-Dispersion nach einem oder mehreren der Ansprüche 1 bis 7, **dadurch gekennzeichnet, dass** die Polyurethandispersion eine Viskosität im Bereich von 10 - 1000 mPa.s gemessen nach DIN EN ISO 3219/A.3 aufweist.

9. Verfahren zur Herstellung einer wässrigen Polyurethan-Dispersion nach einem oder mehreren der Ansprüche 1 bis 8, **dadurch gekennzeichnet, dass** die Komponenten b), c), d) und gegebenenfalls g) und die Polyisocyanatkomponente a) zur Herstellung eines isocyanatfunktionellen Polyurethan-Prepolymers ganz oder teilweise vorgelegt und gegebenenfalls mit einem mit Wasser mischbaren aber gegenüber Isocyanatgruppen inerten Lösungsmittel verdünnt und die so erhaltene Mischung auf Temperaturen im Bereich von 50 bis 120°C aufgeheizt wird.

10. Verwendung einer wässrigen Polyurethan-Dispersion nach einem oder mehreren der Ansprüche 1 bis 8 in einem Beschichtungsmittel.

11. Verwendung nach Anspruch 10, **dadurch gekennzeichnet, dass** das Beschichtungsmittel für die Beschichtung eines Substrates ausgewählt aus der Gruppe bestehend aus Holz, Kunststoff, Metall, Glas, Textilien, Leder, Papier und Fasern geeignet ist.

12. Beschichtungsmittel enthaltend eine wässrige Polyurethan-Dispersion nach einem oder mehreren der Ansprüche 1 bis 8.

13. Substrat, das mit einem Beschichtungsmittel nach Anspruch 12 beschichtet ist.

14. Substrat ausgewählt aus der Gruppe bestehend aus Holz, Kunststoff, Metall, Glas, Textilien, Leder, Papier und Fasern, das mit einem Beschichtungsmittel nach Anspruch 12 beschichtet ist.
